# FASCICULE DE BREVET EUROPEEN

(11) **EP 3 060 428 B1**
(45) Date de publication et mention de la délivrance du brevet: **15.08.2018**
(21) Numéro de dépôt: 14786902.8
(22) Date de dépôt: 21.10.2014
(51) Int. Cl.: B64D 11/06, B60N 3/00, B60N 2/64

(54) **DISPOSITIF DE BLOCAGE EN POSITION D'UN ELEMENT RABATTABLE POUR UN SIEGE DE VEHICULE**
VORRICHTUNG ZUM VERRIEGELN EINES FALTELEMENTS FÜR EINEN FAHRZEUGSITZ IN EINER BESTIMMTEN POSITION
DEVICE FOR LOCKING A FOLDING ELEMENT IN POSITION FOR A VEHICLE SEAT

(30) Priorité: 22.10.2013 FR 1360293
(43) Date de publication de la demande: 31.08.2016
(73) Titulaire: Expliseat, 75006 Paris (FR)
(72) Inventeur: SAADA, Benjamin, 75001 Paris (FR); SAMUELIAN, Jean-Charles, 75005 Paris (FR); TEJEDOR, Vincent, 92130 Issy les Moulineaux (FR); MANGEOT, Alexandre, 84000 Avignon (FR); DUVAL, Gilles, 92300 Levallois-Perret (FR)
(74) Mandataire: Brevalex
(86) Numéro de dépôt international: PCT/EP2014/072504
(87) Numéro de publication internationale: WO 2015/059119

(56) Documents cités:
- EP-A1- 1 431 112
- CH-A- 356 889
- FR-A1- 2 831 496
- FR-A1- 2 943 008

## Description

### DOMAINE TECHNIQUE

La présente invention s'applique au domaine des transports de passagers, entre autres collectifs, notamment par la route, le rail ou l'air. Elle concerne plus particulièrement le domaine des sièges de passagers, et notamment le domaine des éléments rabattables équipant de tels sièges.

L'invention se rapporte ainsi à un dispositif de blocage en position d'un élément rabattable pour un siège de véhicule, un siège de véhicule pour un passager comportant un tel dispositif de blocage, ainsi qu'à un véhicule comportant un tel siège.

### ÉTAT DE LA TECHNIQUE ANTÉRIEURE

Dans le domaine des transports de passagers, les sièges des véhicules de transport sont le plus souvent, et de plus en plus, équipés d'éléments rabattables, et notamment de tablettes que les passagers peuvent déployer ou rabattre en fonction de leurs besoins. En particulier, de telles tablettes peuvent être utilisées par les passagers pour se restaurer, pour travailler ou bien encore se divertir. Elles servent de support pour poser tous types d'objets dont les passagers se servent pendant leur voyage.

Dans le cadre de la conception des éléments rabattables équipant les sièges pour passagers, et en particulier dans le cas des tablettes, des normes de sécurité imposent généralement de prévoir un mécanisme de blocage des tablettes en position relevée. Par « position relevée », on entend dans la présente description une position de non utilisation de l'élément rabattable, notamment contre la face arrière du dossier du siège pour passager. Ce blocage en position relevée des tablettes est également fortement souhaitable pour assurer le confort et la sécurité des passagers pendant leur voyage.

Pour ce faire, on connaît déjà des mécanismes de blocage de tablette en position relevée, contre la face arrière du dossier du siège pour passager.

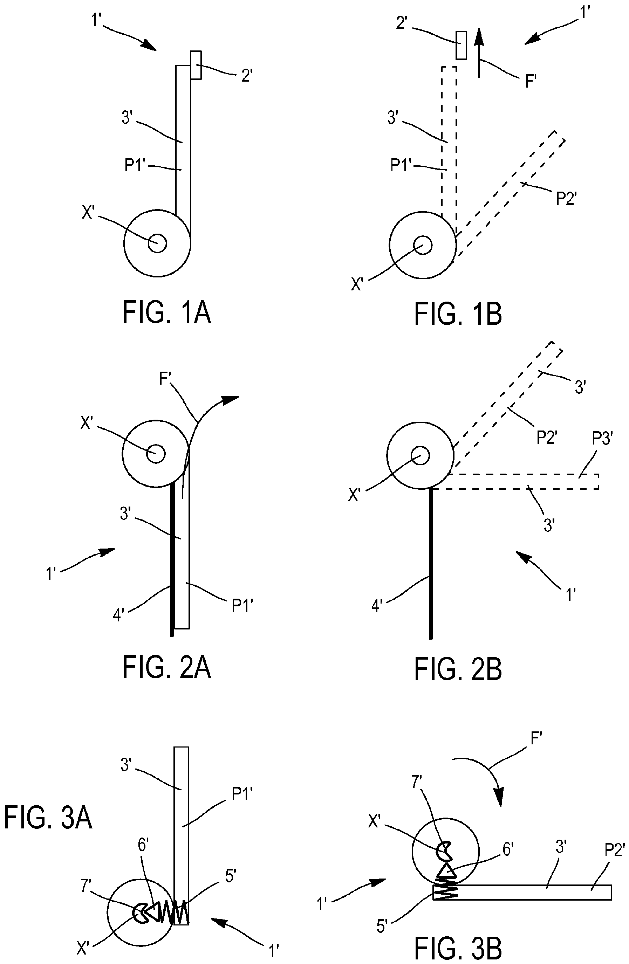

A titre d'exemple, on a illustré sur les figures 1A et 1B un premier exemple de mécanisme de blocage 1' par utilisation d'un loquet déplaçable 2'.

Sur la figure 1A, la tablette 3', montée en rotation autour d'un axe de rotation X' solidaire du siège, est dans une position relevée P1', plus précisément une position verticale P1', contre la face arrière du dossier du siège. Le mécanisme de blocage 1' de la tablette 3' en position relevée P1' est assuré par la présence d'un loquet 2', situé généralement au niveau de la partie haute de la tablette 3', qui est relié à une partie fixe du siège. Le positionnement du loquet 2' contre la face externe de la tablette 3', orientée en direction opposée du siège, bloque la course de la tablette 3' vers toute autre position que celle verticale P1', et notamment vers la position horizontale d'utilisation.

Sur la figure 1B, le passager a déplacé le loquet 2' vers le haut, selon la flèche F', de façon à libérer la tablette 3'. Dans ce cas, le mécanisme de blocage 1' cesse de maintenir la tablette 3' en position relevée P1', et autorise le déplacement de la tablette 3' vers une autre position P2' de celle-ci, par rotation autour de l'axe de rotation X'.

On a également illustré sur les figures 2A et 2B, un deuxième exemple de mécanisme de blocage 1' par utilisation d'un système de rail 4'.

Sur la figure 2A, la tablette 3' est dans une position relevée P1', contre la face arrière du dossier du siège, qui correspond en fait à une position dans laquelle le passager a abaissé la tablette 3' contre la face arrière du dossier du siège. Dans cette position, la tablette 3' est montée sur un système de rail 4' de façon coulissante et a été insérée intégralement sur le système de rail 4' pour permettre son rangement. La flèche F' représente le mouvement que le passager donne à la tablette 3' pour permettre son passage en position d'utilisation P3', c'est-à-dire un mouvement vertical pour soulever la tablette 3', puis un mouvement en rotation autour de l'axe de rotation X' pour abaisser la tablette 3'.

Sur la figure 2B, la tablette 3' a été extraite du système de rail 4' et entraînée en rotation autour de l'axe de rotation X' pour passer successivement de la position de non utilisation P1', à une position intermédiaire P2', puis à la position d'utilisation horizontale P3'.

On a en outre illustré sur les figures 3A et 3B, un troisième exemple de mécanisme de blocage 1' par utilisation d'un système à ressort 5'.

Sur la figure 3A, la tablette 3' est dans une position relevée P1', contre la face arrière du siège pour passager. Un ressort 5', pourvu à une extrémité d'un élément rigide de blocage 6', est fixé à la tablette 3' à son autre extrémité. Le blocage en position verticale P1' de la tablette 3' est assuré par l'insertion de l'élément rigide de blocage 6' dans une encoche d'un élément d'insertion 7' prévu au niveau de l'axe de rotation X' de la tablette 3'. Dans cette position relevée P1' de la tablette 3', le ressort 5' est détendu dans l'encoche de l'élément d'insertion 7'.

Sur la figure 3B, le passager a exercé une force sur la tablette 3' selon la flèche F' pour entraîner la tablette 3' vers sa position horizontale d'utilisation P2'. Pour ce faire, la rotation de la tablette 3' autour de l'axe de rotation X' a provoqué le désengagement de l'élément rigide de blocage 6' dans l'encoche de l'élément d'insertion 7' et la compression du ressort 5'.

En outre, la demande de brevet FR 2 831 496 A1 décrit une tablette articulée pour siège de véhicule. Le penne 34 qui bloque en rotation la tablette est monté coulissant dans celle-ci.

La demande de brevet EP 1431112 A1 décrit un système de table escamotable. Une pièce de blocage est montée fixe sur la tablette rotative et possède des ouvertures dans lesquelles pénètrent des cames.

Ces systèmes sont quelque peu compliqués, et possèdent de nombreuses pièces.

Par ailleurs, la demande de brevet EP 2 646 318 A1 décrit une solution de tablette repliable, combinant une solution en rail avec un déplacement horizontal de la tablette en position dépliée, permettant de régler la distance au dossier de la tablette considérée.

La demande de brevet US 2007/0145791 A1 ajoute à ce réglage horizontal une solution pour joindre deux éléments horizontaux de tablette, et effectuer un blocage horizontal entre deux éléments disjoints, qui peuvent être rangés séparément en position repliée.

Enfin, le brevet US 6,347,590 B1 décrit une solution de tablette repliable dans une console, qui combine un pivot et une rotation pour déplier la tablette. Le blocage de la tablette au sein de la console s'effectue en bloquant la rotation, de façon analogue à la solution décrite dans les figures 3A et 3B.

Néanmoins, les solutions connues de l'art antérieur ne sont pas entièrement satisfaisantes, notamment en termes de fiabilité, d'encombrement, de sécurité, de poids et du nombre d'éléments des mécanismes de blocage en position des éléments rabattables. Plus particulièrement, le premier exemple de mécanisme de blocage par utilisation d'un loquet déplaçable et le deuxième exemple de mécanisme de blocage par utilisation d'un système de rail nécessitent généralement des systèmes de fixation sur la structure portant la tablette, qui sont de conception complexe et qui présentent un poids élevé. De plus, le troisième exemple de mécanisme de blocage par utilisation d'un système à ressort ne permet pas en général de garantir la sécurité des passagers, en particulier du passager assis sur le siège faisant face à la tablette. En effet, la force nécessaire pour débloquer la tablette et l'amener en position d'utilisation est le plus souvent relativement faible, de sorte que la tablette peut d'elle-même se désengager de la position verticale et heurter le passager lors d'un crash, par exemple.

### EXPOSÉ DE L'INVENTION

L'invention a ainsi pour but de remédier au moins partiellement aux besoins mentionnés ci-dessus et aux inconvénients relatifs aux réalisations de l'art antérieur.

L'invention vise notamment à proposer un mécanisme de blocage en position d'un élément rabattable d'un siège pour passager qui soit fiable en termes de réalisation technique et de sécurité pour le passager, qui soit de conception simple, et qui soit d'encombrement et de poids réduits. L'invention est définie par un siège selon la revendication 1. Elle concerne également un véhicule selon la revendication 12. Grâce à l'invention, il peut être possible de diminuer significativement le nombre et le poids des pièces utilisées pour réaliser le blocage de l'élément rabattable en position de non utilisation. De plus, l'invention peut permettre d'assurer la sécurité du passager, notamment en cas de crash, du fait d'une fiabilité améliorée par rapport aux solutions de l'art antérieur. En outre, l'invention peut permettre de diminuer l'encombrement global qu'occupe l'élément rabattable sur le siège pour passager. L'ergonomie peut ainsi être améliorée. L'invention est particulièrement avantageuse pour le transport collectif de passagers, notamment par la route, le rail ou l'air.

Le dispositif de blocage selon l'invention peut en outre comporter l'une ou plusieurs des caractéristiques suivantes prises isolément ou suivant toutes combinaisons techniques possibles.

La première structure de blocage de l'élément rotatif peut être une première ouverture et/ou un crochet de blocage.

L'élément rotatif peut être un élément sensiblement cylindrique comportant au moins une première structure de blocage sur sa surface latérale.

L'élément fixe peut comporter au moins une deuxième structure de blocage, notamment une deuxième ouverture, au travers de laquelle est apte à venir s'engager l'élément de blocage.

La première structure de blocage de l'élément rotatif et/ou la deuxième structure de blocage de l'élément fixe peuvent s'étendre, au moins en partie, selon l'axe de rotation de l'élément rotatif.

L'élément rotatif peut être, au moins partiellement, inséré dans l'élément fixe, ou inversement. La première structure de blocage et la deuxième structure de blocage peuvent être aptes à venir en vis-à-vis l'une de l'autre pour permettre l'engagement de l'élément de blocage au travers des première et deuxième structures de blocage.

L'élément fixe peut être un élément sensiblement cylindrique.

Le dispositif peut comporter des moyens d'auto-engagement, notamment un système d'organe de rappel élastique et/ou un système aimanté, de l'élément de blocage dans au moins la première structure de blocage de l'élément rotatif, lorsque l'élément de blocage est en vis-à-vis de la première structure de blocage lors de la rotation de l'élément rotatif autour de l'axe de rotation.

L'élément de blocage peut présenter une forme sensiblement en arc-de-cercle, lorsqu'observé en section selon un plan perpendiculaire à l'axe de rotation.

L'élément de blocage, notamment dans le cas décrit ci-dessus, peut être monté rotatif autour d'un axe de rotation décalé par rapport à l'élément de blocage et à l'axe de rotation de l'élément rotatif pour permettre son engagement dans la première structure de blocage.

L'axe de rotation de l'élément rotatif peut être un axe de rotation à couple contrôlé, comportant notamment un ressort de torsion.

L'invention a encore pour objet, selon un autre de ses aspects, un siège de véhicule pour un passager, comportant :
- un dossier présentant une face avant dirigée vers le passager et une face arrière opposée à la face avant, et
- un élément rabattable, notamment une tablette, vers la face arrière du dossier, monté de façon pivotante par rapport au dossier selon un axe de rotation, permettant à l'élément rabattable de prendre au moins deux positions angulaires prédéterminées, dont une position relevée correspondant à une non utilisation de l'élément rabattable,
caractérisé en ce qu'il comporte un dispositif de blocage en position de l'élément rabattable tel que défini précédemment, permettant au moins le blocage en position de l'élément rabattable dans la position relevée.

L'élément de blocage peut comporter un élément formant encoche se trouvant positionné en regard de l'élément rotatif, lorsque l'élément rabattable est en position de blocage en rotation, l'élément rotatif pénétrant l'élément formant encoche.

L'invention a encore pour objet, selon un autre de ses aspects, un véhicule comportant un siège tel que défini précédemment.

Par « véhicule », on entend tout moyen de transport ou de déplacement d'au moins un passager, par exemple un avion, une voiture, un train, une poussette, une cabine de téléphérique, un télésiège, un bateau, une nacelle d'une attraction à sensation forte, entre autres.

Le siège et le véhicule selon l'invention peuvent comporter l'une quelconque des caractéristiques précédemment énoncées, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :
- les figures 1A et 1B illustrent un premier exemple de mécanisme de blocage en position de tablette de siège de véhicule selon l'art antérieur,
- les figures 2A et 2B illustrent un deuxième exemple de mécanisme de blocage en position de tablette de siège de véhicule selon l'art antérieur,
- les figures 3A et 3B illustrent un troisième exemple de mécanisme de blocage en position de tablette de siège de véhicule selon l'art antérieur,
- la figure 4 représente, en perspective et partiellement, un exemple de réalisation d'un dispositif de blocage conforme à l'invention,
- les figures 5A à 5C représentent, en coupe, trois étapes de mise en oeuvre d'un exemple de réalisation d'un dispositif de blocage conforme à l'invention,
- la figure 5D représente une variante de réalisation du dispositif de blocage des figures 5A-5C,
- les figures 6A et 6B représentent, en coupe, deux étapes de mise en oeuvre d'un autre exemple de réalisation d'un dispositif de blocage conforme à l'invention,
- la figure 6C représente une variante de réalisation du dispositif des figures 6A et 6B,
- les figures 7A et 7B représentent encore, en coupe, deux étapes de mise en oeuvre d'un autre exemple de réalisation d'un dispositif de blocage conforme à l'invention,
- les figures 8A à 8C représentent, en coupe, trois étapes de mise en oeuvre d'un autre exemple de réalisation d'un dispositif de blocage conforme à l'invention, avec utilisation d'un système d'organe de rappel élastique,
- les figures 9A à 9C représentent, en coupe, trois étapes de mise en oeuvre d'un autre exemple de réalisation d'un dispositif de blocage conforme à l'invention, avec utilisation d'un système aimanté,
- la figure 10 représente, en perspective, un exemple de dispositif de blocage conforme à l'invention, fixé à un élément rabattable d'un siège pour passager,
- la figure 11 représente, en perspective, un exemple de siège pour véhicule conforme à l'invention,
- les figures 12A à 12D représentent encore, en coupe, quatre étapes de mise en oeuvre d'un autre exemple de dispositif de blocage conforme à l'invention,
- la figure 13 représente encore, en coupe et en vue de face, un autre exemple de réalisation d'un dispositif de blocage conforme à l'invention, et
- la figure 14, représente, en coupe, un détail de la figure 5D.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1A à 3B ont déjà été décrites précédemment dans la partie relative à l'état de la technique antérieure.

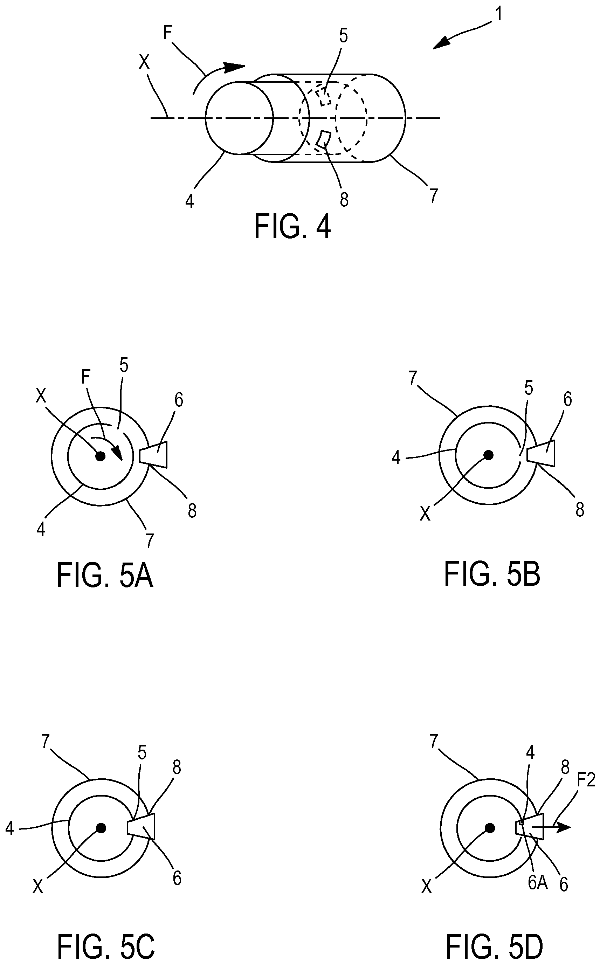

Il va maintenant être décrit ci-après, en référence aux figures 4 à 6B, des exemples de mise en oeuvre de l'invention.

On a représenté sur la figure 4, en perspective et de manière partielle, un premier exemple de réalisation d'un dispositif de blocage 1 en position conforme à l'invention. Sur cette figure 1, par souci de facilité de compréhension de l'invention, l'élément rabattable 2 et l'élément de blocage 6 n'ont pas été représentés.

Il est à noter que, dans toute la présente description, l'élément rabattable 2 est préférentiellement une tablette 2 d'un siège 3 pour passager, bien que cela ne soit nullement limitatif.

Conformément à l'invention, le dispositif de blocage 1 comporte un élément rotatif 4 autour d'un axe de rotation X, qui correspond à l'axe de rotation X de la tablette 2, montée de façon pivotante par rapport au dossier 10.

Cet élément rotatif 4 est solidarisé de façon fixe à la tablette 2 de sorte qu'il permet l'entraînement en rotation autour de l'axe de rotation X de la tablette 2.

Avantageusement, l'élément rotatif 4 se présente sous la forme d'un cylindre, notamment un cylindre creux, qui comporte au moins une première structure de blocage sous la forme d'une première ouverture 5 sur sa surface latérale. La première ouverture 5 peut correspondre à un orifice formé sur l'élément rotatif 4. La première ouverture 5 peut être débouchante ou non sur le bord de la surface latérale de l'élément rotatif 4.

En variante, bien que non représenté sur la figure 4, l'élément rotatif 4 peut comporter une pluralité de premières ouvertures 5 associée à une pluralité d'éléments de blocage 6 pour permettre le blocage en position de la tablette 2 selon plusieurs configurations angulaires.

Par ailleurs, le dispositif de blocage 1 comporte encore un élément fixe 7, positionné relativement à l'élément rotatif 4 de sorte que ce dernier soit inséré, au moins partiellement, à l'intérieur de l'élément fixe 7. Ainsi, l'élément rotatif 4 et l'élément fixe 7 sont emmanchés l'un dans l'autre au niveau de l'axe de rotation X de la tablette 2.

Avantageusement, l'élément fixe 7 se présente également sous la forme d'un cylindre, notamment un cylindre creux, de diamètre supérieur à celui de l'élément rotatif 4.

Cet élément fixe 7 comporte par ailleurs sur sa surface latérale au moins une deuxième structure de blocage sous la forme d'une deuxième ouverture 8 au travers de laquelle est apte à s'engager l'élément de blocage 6.

Tout comme pour l'élément rotatif 4, l'élément fixe 7 peut comporter en variante, bien que non représenté, une pluralité de deuxièmes ouvertures 8 associée à une pluralité d'éléments de blocage 6 pour permettre le blocage en position de la tablette 2 selon plusieurs configurations angulaires.

Le dispositif de blocage 1 fonctionne alors de la manière suivante : lors de la rotation de la tablette 2, ou plus particulièrement de l'élément rotatif 4, selon la flèche F, les première 5 et deuxième 8 ouvertures se retrouvent en vis-à-vis l'une de l'autre. Alors, l'insertion de l'élément de blocage 6 au travers des première 5 et deuxième 8 ouvertures peut permettre le blocage en position de la tablette 2, par blocage de la rotation de l'élément rotatif 4 autour de l'axe de rotation X.

L'élément de blocage 6 est préférentiellement rigide, et en particulier suffisamment rigide pour permettre le blocage en rotation de l'élément rotatif 4 quelle que soit la force exercée sur la tablette 2, notamment en cas de crash.

L'élément fixe 7 peut être solidarisé au siège 3 de véhicule de diverses manières, pourvu qu'il soit fixe relativement au siège 3.

L'élément rotatif 4 peut être solidarisé à la tablette 2 de diverses manières, pourvu qu'il soit fixe relativement à la tablette 2.

Lorsque l'élément de blocage 6 est désengagé des première 5 et deuxième 8 ouvertures, la libre rotation de la tablette 2 est alors permise, notamment pour venir en position horizontale d'utilisation.

L'élément de blocage 6 peut se présenter sous diverses formes. En particulier, son étendu selon l'axe de rotation X peut être de longueur variable.

On a en outre représenté sur les figures 5A à 5C, trois étapes de fonctionnement d'un dispositif de blocage 1 en position d'une tablette 2 selon l'invention. Sur ces figures, l'élément de blocage 6 est visible.

Sur la figure 5A, la tablette 2 est dans une position autre que celle relevée, c'est-à-dire celle correspondant à une configuration d'utilisation. Ainsi, la première ouverture 5 de l'élément rotatif 4 n'est pas située en vis-à-vis de la deuxième ouverture 8 de l'élément fixe 7.

Lors de la rotation de l'élément rotatif 4, c'est-à-dire lors de la rotation de la tablette 2, selon la flèche F comme représenté sur la figure 5A, la première ouverture 5 vient se positionner en face de la deuxième ouverture 8 de l'élément fixe 7, comme représenté sur la figure 5B.

Il est à noter que l'élément de blocage 6 peut être monté de façon coulissante par rapport à l'élément fixe 7. Il peut être en permanence engagé, au moins partiellement, dans la deuxième ouverture 8 de l'élément fixe 7 et se déplacer au moment du blocage, ou être situé extérieurement à la deuxième ouverture 8 de l'élément fixe 7 et venir s'engager dans cette deuxième ouverture 8 au moment du blocage.

Lorsque la première ouverture 5 de l'élément rotatif 4 est située en vis-à-vis de la deuxième ouverture 8 de l'élément fixe 7, comme représenté sur la figure 5B, le blocage en rotation de l'élément rotatif 4, et donc de la tablette 2, est possible.

Comme représenté sur la figure 5C, l'élément de blocage 6 vient alors s'engager complètement au sein des première 5 et deuxième 8 ouvertures, soit par une action manuelle du passager, soit de façon automatique.

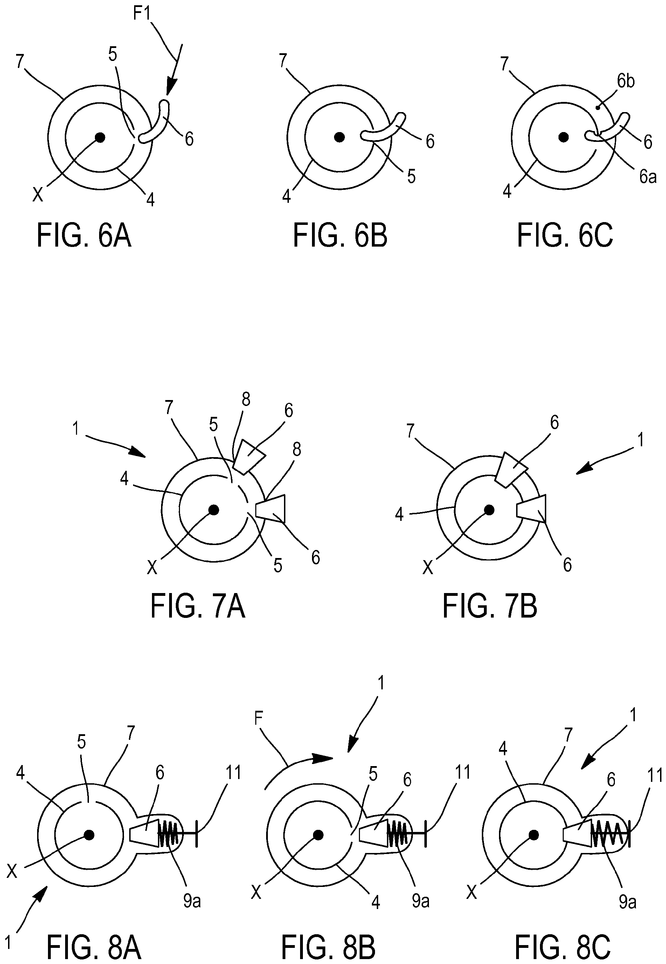

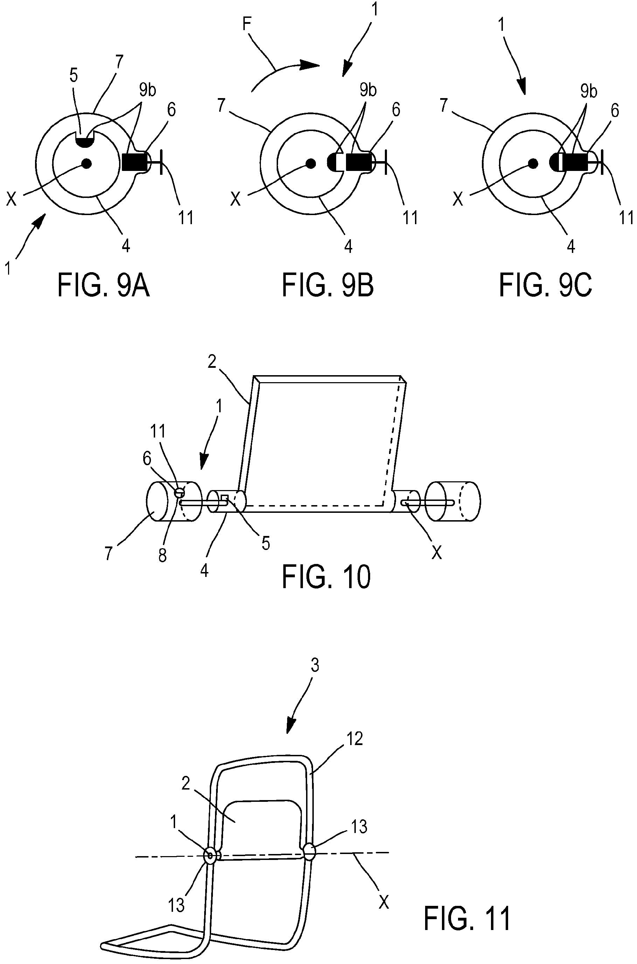

En particulier, l'auto-engagement de l'élément de blocage 6 au travers des première 5 et deuxième 8 ouvertures peut être réalisé par un des moyens d'auto-engagement 9a, 9b du dispositif de blocage 1, comme par exemple un système d'organe de rappel élastique 9a, par exemple un ressort, ou encore un système aimanté 9b, comme illustré respectivement sur les figures 8A-8C et 9A-9C, prévus entre l'axe de rotation X et l'élément de blocage 6. De cette façon, le blocage peut être réalisé de façon automatique dès que l'alignement des première 5 et deuxième 8 ouvertures est réalisé.

L'utilité de la forme trapézoïdale de l'élément de blocage 6, ce dernier étant en réalité un tronc de cône vu en coupe, est de faciliter l'insertion dans un trou cylindrique du cylindre lié à la tablette. En effet, les ajustements entre les deux cylindres en rotation étant imparfaits, un élément rigide purement cylindrique nécessiterait un alignement parfait des deux cylindres en rotation.

Cependant, d'éventuelles vibrations dans le siège ont tendance à repousser l'élément de blocage 6 (voir la flèche F2 sur la figure 5D), ce qui n'est pas compatible avec sa fonction. Les normes aéronautiques imposent que la tablette reste bloquée en position relevée, y compris lors d'atterrissages d'urgence.

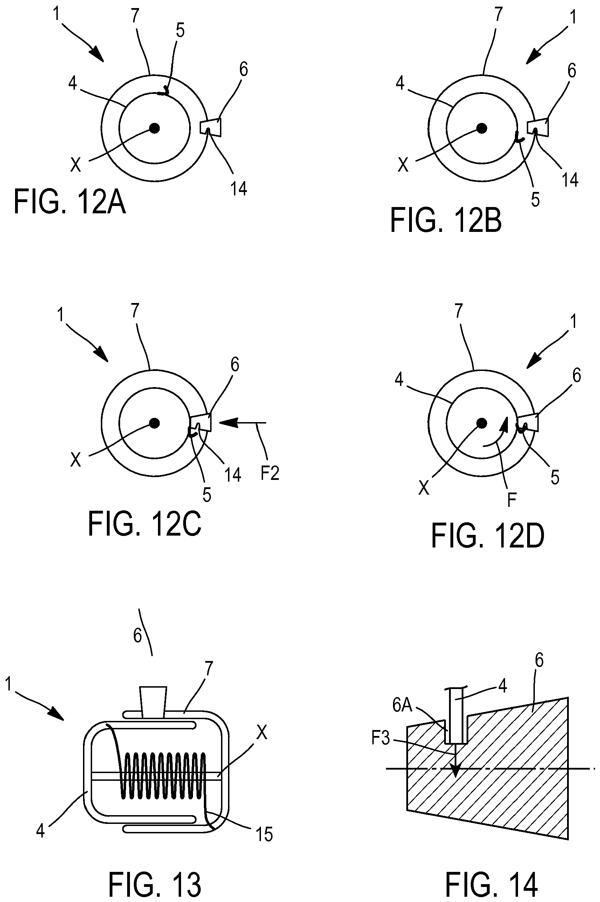

En référence à la figure 5D, pour améliorer cette solution, on prévoit un élément formant encoche 6A dans l'élément de blocage 6 placé de manière à se trouver, en position de blocage, en regard de l'élément rotatif 4 qui pénètre alors dans l'élément formant encoche. La force générée par d'éventuelles vibrations n'est plus dirigée dans la direction de retrait de l'élément de blocage 6, mais perpendiculairement, car l'élément rotatif 4 tape dans le fond de l'élément formant encoche 6A (voir figure 14 et la flèche F3).

On a représenté sur les figures 6A et 6B une autre variante de réalisation du dispositif de blocage 1 conforme à l'invention.

Dans cet exemple, l'élément de blocage 6 présente une forme sensiblement en arc-de-cercle, lorsqu'observé en section selon un plan perpendiculaire à l'axe de rotation X.

L'élément de blocage 6 peut par exemple être métallique.

Il se présente ainsi sous la forme d'un « haricot », apte à venir s'insérer au travers des première 5 et deuxième 8 ouvertures, après un mouvement de rotation autour d'un axe de rotation 6B décalé par rapport à l'axe de rotation X de l'élément rotatif 4 et l'élément de blocage 6, selon la flèche F1 de la figure 6A, pour permettre le blocage en rotation de l'élément rotatif 4, et donc de la tablette 2, comme représenté sur la figure 6B.

La forme de l'élément de blocage 6 peut permettre d'optimiser sa fonction. En particulier, une forme en arc-de-cercle concave aura moins de chance de pouvoir être désengagée en cas de mouvement brusque, par exemple lors d'un crash, ou lorsque l'élément rotatif 4 vibre.

En référence à la figure 6C, le dispositif de blocage 1 peut encore comporter un élément formant encoche 6A, associé à l'utilisation de l'élément de blocage 6, pour augmenter la solidité du blocage en position relevée de la tablette 2. L'élément rotatif 4 de la tablette 2 est alors inséré dans l'élément formant encoche 6A lorsqu'elle se trouve dans sa position relevée de non utilisation. En particulier, pour bloquer la tablette 2, le passager peut relever la tablette 2 au-delà de sa position relevée pour venir l'insérer dans l'élément formant encoche et actionner manuellement, ou non pour un mécanisme automatique de verrouillage de l'élément de blocage 6, l'élément de blocage 6 pour bloquer la tablette 2 en position. De même, pour débloquer la tablette 2, le passager peut relever la tablette 2 pour la désengager de l'élément formant encoche et actionner manuellement, ou non si le mécanisme est automatique, l'élément de blocage 6.

On a encore représenté sur les figures 7A et 7B une autre variante de réalisation du dispositif de blocage 1 conforme à l'invention.

La figure 7A représente une configuration de déblocage du dispositif de blocage 1 dans laquelle la libre rotation est permise entre l'élément rotatif 4 et l'élément fixe 7, alors que la figure 7B représente une configuration de blocage du dispositif de blocage 1 dans laquelle la rotation de l'élément rotatif 4 par rapport à l'élément fixe 7 n'est pas possible.

Dans cette variante, par comparaison avec l'exemple de réalisation des figures 5A à 5C, le dispositif de blocage 1 comporte deux éléments de blocage 6, aptes à s'engager respectivement dans deux premières ouvertures 5 de l'élément rotatif 4 et deux deuxièmes ouvertures 8 de l'élément fixe 7. De cette façon, il peut être possible de bloquer la rotation de l'élément rotatif 4 par rapport à l'élément fixe 7 pour différentes configurations angulaires, notamment pour différentes positions de la tablette 2.

On a par ailleurs représenté sur les figures 8A à 8C, trois étapes de mise en oeuvre d'un autre exemple de dispositif de blocage 1 conforme à l'invention.

Dans cet exemple, le dispositif de blocage 1 comporte des moyens d'auto-engagement constitués par un système d'organe de rappel élastique 9a, et plus précisément par un ressort 9a.

Sur la figure 8A, le ressort 9a est comprimé contre la surface latérale de l'élément rotatif 4.

Puis, comme on peut le voir sur la figure 8B, la rotation de l'élément rotatif 4 selon la flèche F par rapport à l'élément fixe 7 permet d'approcher la première ouverture 5 en vis-à-vis de l'élément de blocage 6 porté par le ressort 9a.

Alors, comme représenté sur la figure 8C, la détente du ressort 9a permet l'insertion de l'élément de blocage 6 dans la première ouverture 5 de l'élément rotatif 4, et donc le blocage de la tablette 2 en position.

Par ailleurs, un organe de préhension 11 est prévu à l'extrémité opposée du ressort 9a, l'ensemble formé par l'organe de préhension 11, le ressort 9a et l'élément de blocage 6 étant solidaire, de sorte à permettre au passager d'agir en traction sur l'organe de préhension 11 pour débloquer le dispositif 1, par désengagement de l'élément de blocage 6 depuis la première ouverture 5.

On a en outre représenté sur les figures 9A à 9C, trois étapes de mise en oeuvre d'un autre exemple de dispositif de blocage 1 conforme à l'invention.

Dans cet exemple, le dispositif de blocage 1 comporte des moyens d'auto-engagement constitués par un système aimanté 9b, et plus précisément par un système aimanté 9b comportant un premier aimant logé dans la première ouverture 5 de l'élément rotatif 4 et un deuxième aimant formé par l'élément de blocage 6.

Sur la figure 9A, l'élément de blocage 6 aimanté est en retrait de la surface latérale de l'élément rotatif 4.

Puis, comme on peut le voir sur la figure 9B, la rotation de l'élément rotatif 4 selon la flèche F par rapport à l'élément fixe 7 permet d'approcher la première ouverture 5, comportant le premier aimant du système aimanté 9b, en vis-à-vis de l'élément de blocage 6 aimanté.

Alors, comme représenté sur la figure 9C, l'attraction de l'élément de blocage 6 aimanté vers le premier aimant logé dans la première ouverture 5 de l'élément rotatif 4 permet l'insertion de l'élément de blocage 6 dans la première ouverture 5 de l'élément rotatif 4, et donc le blocage de la tablette 2 en position.

Par ailleurs, tout comme pour l'exemple de réalisation représenté sur les figures 8A à 8C, un organe de préhension 11 est prévu à l'extrémité opposée de l'élément de blocage 6 de sorte à permettre au passager d'agir en traction sur l'organe de préhension 11 pour débloquer le dispositif 1, par désengagement de l'élément de blocage 6 depuis la première ouverture 5.

On a représenté sur la figure 10, en perspective, un exemple de dispositif de blocage 1 conforme à l'invention, fixé sur une tablette 2 d'un siège 3 pour passager.

Comme on peut le voir, le dispositif de blocage 1 est par exemple prévu extérieurement à la tablette 2, notamment sur un seul côté de la tablette 2. En variante, le dispositif de blocage 1 pourrait être situé intérieurement à la tablette 2, ou deux dispositifs de blocage 1 pourraient être prévus de part et d'autre de la tablette 2.

Le dispositif de blocage 1 comporte ainsi un élément rotatif 4 qui est fixé à la tablette 2, de sorte que la tablette 2 et l'élément rotatif 4 sont entraînés en rotation autour de l'axe de rotation X.

En outre, l'élément fixe 7 du dispositif de blocage 1 est fixé au siège 3 pour passager, et emmanché au moins partiellement avec l'élément rotatif 4. En particulier, l'élément fixe 7 est situé extérieurement à l'élément rotatif 4.

L'élément fixe 7 comporte par ailleurs, sur sa surface latérale, une deuxième ouverture 8 au travers de laquelle peut coulisser l'élément de blocage 6. De même, l'élément rotatif 4 comporte une première ouverture 5, et lorsque les première 5 et deuxième 8 ouvertures sont amenées en vis-à-vis par rotation de la tablette 2 autour de l'axe X, l'élément de blocage 6 est apte à s'insérer au travers des deux ouvertures 5 et 8 pour réaliser le blocage en position de la tablette 2.

Un organe de préhension 11, tel que décrit précédemment, peut également être prévu à une extrémité de l'élément de blocage 6 pour permettre un déverrouillage du dispositif de blocage 1.

On a également représenté sur la figure 11, en perspective, un exemple de siège 3 pour véhicule conforme à l'invention.

Le siège 3 comporte une structure de siège 12 et une tablette rabattable 2.

La tablette 2 est solidarisée à la structure de siège 12 par l'intermédiaire de deux bagues d'accroche 13, situées de part et d'autre de la tablette 2.

Conformément à l'invention, au moins une des bagues d'accroche 13 peut comporter un dispositif de blocage 1 selon l'invention. Dans ce cas, le blocage en position relevée de la tablette 2 peut être assuré par le passager par utilisation du dispositif de blocage 1, en particulier par le biais d'un actionnement sur un organe de préhension 11 du dispositif de blocage 1.

On a par ailleurs représenté sur les figures 12A à 12D, en coupe, quatre étapes de mise en oeuvre d'un autre exemple de dispositif de blocage 1 conforme à l'invention.

Dans cet exemple, la première structure de blocage 5 de l'élément rotatif 4 se présente sous la forme d'un crochet de blocage 5. De plus, l'élément de blocage 6 comporte une encoche de blocage 14 dans laquelle peut s'engager le crochet de blocage 5.

Entre les configurations des figures 12A et 12B, l'élément rotatif 4 tourne autour de l'axe de rotation X de sorte à amener le crochet de blocage 5 sensiblement en vis-à-vis de l'élément de blocage 6, le crochet de blocage 5 faisant face à l'encoche de blocage 14.

Alors, comme représenté sur la figure 12C, l'élément de blocage 6 est actionné selon la flèche F2 pour amener l'élément de blocage 6 contre la surface latérale de l'élément rotatif 4 et mettre l'encoche de blocage 14 en vis-à-vis du crochet de blocage 5.

Puis, comme représenté sur la figure 12D, une rotation selon la flèche F de l'élément rotatif 4 permet de finir l'insertion du crochet de blocage 5 dans l'encoche de blocage 14 de l'élément de blocage 6 pour maintenir en position verrouillée la tablette 2.

La figure 13 représente encore, en coupe et de face, un autre exemple de réalisation d'un dispositif de blocage 1 conforme à l'invention.

Dans cet exemple, l'axe de rotation X est un axe de rotation à couple contrôlé. En particulier, il comporte un organe de rappel élastique, notamment un ressort de torsion 15.

La présence d'un tel ressort de torsion 15 peut permettre de régler plus finement la cinématique de la tablette 2 lors de son ouverture, et de procurer au passager un sentiment plus agréable de maîtrise du mouvement par le mécanisme du dispositif de blocage 1.

En effet, le couple contrôlé de l'axe de rotation X permet d'éviter une chute brutale et accélérée de la tablette 2 lorsqu'elle est verticale (en position relevée de non utilisation), mais qu'elle n'est plus bloquée par le dispositif de blocage 1, tandis que le ressort de torsion 15 peut permettre un dégagement facile de la tablette 2 une fois que l'élément de blocage 6 est désengagé de la structure de blocage 5.

Ainsi, lors du déblocage de la tablette 2, le ressort de torsion 15 est relâché et pousse la tablette 2 vers la position horizontale d'utilisation. L'axe de rotation X à couple contrôlé permet d'éviter que le mouvement de la tablette 2 ne soit trop brutal : à la poussée initiale du ressort de torsion 15, puis au poids de la tablette 2, s'oppose un couple de frottement contrôlé.

Pour permettre de réaliser le système de blocage constitué par l'élément de blocage 6 et au moins la première structure de blocage 5 de l'élément rotatif 4 dans lequel l'élément de blocage 6 est apte à s'engager, on peut utiliser un principe de pion plongeur et/ou de charnière. Le pion plongeur est un cylindre couplé à un ressort, qui peut être enfoncé par pression du ressort, et libéré par une traction de l'utilisateur, remontant par ce même mouvement le ressort. Le pion plongeur permet ainsi une réalisation comme illustrée aux figures 8A-8C, avec un élément de blocage 6 rigide couplé à un ressort 9a, et une prise ou organe de préhension 11 pour l'utilisateur, pouvant être directement formée par l'élément de blocage 6 rigide.

La charnière peut avantageusement remplacer l'axe de rotation X en y introduisant d'une part un contrôle du couple, qui évite la chute brutale de la tablette 2 une fois libérée de l'élément de blocage 6 rigide. Le frottement constant garantit une chute douce de la tablette 2, et un meilleur confort d'utilisation pour le passager. A cette charnière à couple contrôlée peut être adjoint un ressort de torsion, qui facilite l'ouverture de la tablette 2 : dès que l'élément de blocage 6 rigide, par exemple le pion plongeur, est relevé, la tablette 2 est ouverte d'un angle de 10° ou plus, et évite que la tablette 2 ne soit bloquée à nouveau par le pion plongeur quand ce dernier est relâché. Ce ressort de torsion permet ainsi l'ouverture de la tablette 2 à l'aide d'une seule main, et procure à nouveau un confort accru d'utilisation pour le passager. Cette réalisation est à rapprocher de celle décrite en référence à la figure 13.

Le fait que l'élément de blocage 6 soit monté mobile dans l'élément fixe 7 permet qu'il ne soit atteint par un usager que dans une position fixe qu'on choisit de façon à ce que l'élément de blocage 6 ne soit accessible que volontairement.

En effet, dans le système exposé par les figures 3A et 3B, le fait qu'il soit monté dans ou sur la tablette 3, dans au moins deux portions d'inclinaison de celle-ci, peut occasionner un actionnement accidentel de celle-ci par mégarde ou par un faux mouvement d'un usager, par exemple lors de l'évacuation du véhicule.

Bien entendu, l'invention n'est pas limitée aux exemples de réalisation qui viennent d'être décrits. Diverses modifications peuvent y être apportées par l'homme du métier.

L'expression « comportant un » doit être comprise comme étant synonyme de « comportant au moins un », sauf si le contraire est spécifié.

## Revendications

1. Siège de véhicule (3) pour un passager comportant :
- un dossier (10) présentant une face avant (10a) dirigée vers le passager et une face arrière (10b) opposée à la face avant (10a), et
- un élément rabattable (2), notamment une tablette, vers la face arrière (10b) du dossier (10), monté de façon pivotante par rapport au dossier (10) selon un axe de rotation (X), permettant à l'élément rabattable (2) de prendre au moins deux positions angulaires prédéterminées, dont une position relevée correspondant à une non utilisation de l'élément rabattable (2),
- un dispositif de blocage (1) en position de l'élément rabattable (2), **caractérisé en ce que** ce dispositif de blocage (1) comprend :
- un élément fixe (7), fixé audit dossier (10),
- un élément rotatif (4), fixé audit élément rabattable (2) et monté en rotation par rapport audit élément fixe (7) autour dudit axe de rotation (X) en étant inséré au moins partiellement dans cet élément fixe (7), ledit élément rotatif (4) comportant au moins une première structure de blocage (5),
- un élément de blocage (6), monté sur ledit élément fixe (7) et déplaçable entre une position de blocage dans laquelle il assure le blocage en rotation dudit élément rotatif (4) par rapport audit élément fixe (7) par engagement, au moins en partie, dudit élément de blocage (6) dans ladite au moins une première structure de blocage (5) dudit élément rotatif (4), et une position de déblocage dans laquelle il autorise la libre rotation dudit élément rotatif (4) par rapport audit élément fixe (7) par désengagement dudit élément de blocage (6) dans ladite au moins une première structure de blocage (5) dudit élément rotatif (4).

2. Siège selon la revendication 1, **caractérisé en ce que** la première structure de blocage (5) de l'élément rotatif (4) est une première ouverture (5) et/ou un crochet de blocage (5).

3. Siège selon la revendication 1 ou 2, **caractérisé en ce que** l'élément rotatif (4) est un élément sensiblement cylindrique comportant au moins une première structure de blocage (5) sur sa surface latérale.

4. Siège selon l'une des revendications précédentes, **caractérisé en ce que** l'élément fixe (7) comporte au moins une deuxième structure de blocage (8), notamment une deuxième ouverture (8), au travers de laquelle est apte à venir s'engager l'élément de blocage (6).

5. Siège selon la revendication 4, **caractérisé en ce que** la première structure de blocage (5) et la deuxième structure de blocage (8) sont aptes à venir en vis-à-vis l'une de l'autre pour permettre l'engagement de l'élément de blocage (6) au travers des première (5) et deuxième (8) structures de blocage.

6. Siège selon la revendication 4 ou 5, **caractérisé en ce que** l'élément fixe (7) est un élément sensiblement cylindrique.

7. Siège selon l'une quelconque des revendications précédentes, **caractérisé en ce qu'**il comporte des moyens d'auto-engagement (9a, 9b), notamment un système d'organe de rappel élastique (9a) et/ou un système aimanté (9b), de l'élément de blocage (6) dans au moins la première structure de blocage (5) de l'élément rotatif (4), lorsque l'élément de blocage (6) est en vis-à-vis de la première structure de blocage (5) lors de la rotation de l'élément rotatif (4) autour de l'axe de rotation (X).

8. Siège selon l'une quelconque des revendications précédentes, **caractérisé en ce que** l'élément de blocage (6) présente une forme sensiblement en arc-de-cercle, lorsqu'observé en section selon un plan perpendiculaire à l'axe de rotation (X).

9. Siège selon l'une quelconque des revendications précédentes, **caractérisé en ce que** l'élément de blocage (6) est monté rotatif autour d'un axe de rotation (6B) décalé par rapport à celui de l'élément de blocage (6) et à l'axe de rotation (X) de l'élément rotatif (4) pour permettre son engagement dans la première structure de blocage (5).

10. Siège selon l'une quelconque des revendications précédentes, **caractérisé en ce que** l'axe de rotation (X) de l'élément rotatif (4) est un axe de rotation à couple contrôlé, comportant notamment un ressort de torsion (15).

11. Siège selon l'une quelconque des revendications précédentes, **caractérisé en ce que** l'élément de blocage (6) comporte un élément formant encoche (6A) se trouvant positionné en regard de l'élément rotatif (4), lorsque l'élément rabattable est en position de blocage en rotation, l'élément rotatif (4) pénétrant l'élément formant encoche (6A).

12. Véhicule comportant un siège (3) selon l'une des revendications précédentes.

## Patentansprüche

1. Fahrzeugsitz (3) für einen Passagier, aufweisend:
eine Rückenlehne (10), die eine zum Passagier hin gerichtete Vorderfläche (10a) und eine der Vorderfläche (10a) gegenüberliegende Rückfläche (10b) aufweist, und
ein klappbares Element (2), insbesondere ein Tablett, wobei es hin zur Rückfläche (10b) der Rückenlehne (10) klappbar ist und es bezüglich der Rückenlehne (10) um eine Drehachse (X) schwenkbar angebracht ist, was es dem klappbaren Element (2) erlaubt, mindestens zwei vorbestimmte Winkelpositionen einzunehmen, von denen eine hochgeklappte Position einer Nicht-Verwendung des klappbaren Elementes (2) entspricht. eine Vorrichtung zur Positionsblockierung (1) des klappbaren Elementes (2), **dadurch gekennzeichnet, dass** die Blockiervorrichtung (1) aufweist:
ein feststehendes Element (7), das an der Rückenlehne (10) befestigt ist,
ein drehbares Element (4), das an dem klappbaren Element (2) befestigt ist und drehbar um die Drehachse (X) bezüglich des feststehenden Elementes (7) angebracht ist, wobei es zumindest teilweise in dieses feststehende Element (7) eingesetzt ist, wobei das drehbare Element (4) mindestens eine erste Blockierstruktur (5) aufweist,
ein an dem feststehenden Element (7) angebrachtes Blockierelement (6) bewegbar ist, und zwar zwischen einer Blockierposition, in welcher es für das Blockieren des Drehens des drehbaren Elementes (4) bezüglich des feststehenden Elementes (7) sorgt, und zwar durch ein zumindest teilweises Eingreifen des Blockierelementes (6) in die mindestens eine erste Blockierstruktur (5) des drehbaren Elementes (4), und einer Blockierfreigabe-Position, in welcher es das freie Drehen des drehbaren Elementes (4) bezüglich des feststehenden Elementes (7) gestattet, und zwar dadurch, dass das Blockierelement (6) aus der mindestens einen ersten Blockierstruktur (5) des drehbaren Elementes (4) außer Eingriff gebracht wird.

2. Sitz nach Anspruch 1, **dadurch gekennzeichnet, dass** die erste Blockierstruktur (5) des drehbaren Elementes (4) eine erste Öffnung (5) und/oder ein Blockierhaken (5) ist.

3. Sitz nach Anspruch 1 oder 2, **dadurch gekennzeichnet, dass** das drehbare Element (4) ein im Wesentlichen zylindrisches Element ist, das mindestens eine erste Blockierstruktur (5) auf seiner Seitenfläche aufweist.

4. Sitz nach einem der vorhergehenden Ansprüche, **dadurch gekennzeichnet, dass** das feststehende Element (7) mindestens eine zweite Blockierstruktur (8) aufweist, und zwar insbesondere eine zweite Öffnung (8), durch die hindurch das Blockierelement (6) in Eingriff kommen kann.

5. Sitz nach Anspruch 4, **dadurch gekennzeichnet, dass** die erste Blockierstruktur (5) und die zweite Blockierstruktur (8) geeignet sind, einander gegenüberliegend zu liegen zu kommen, um das in Eingriff-Kommen des Blockierelementes (6) durch die erste (5) und die zweite (8) Blockierstruktur hindurch zu ermöglichen.

6. Sitz nach Anspruch 4 oder 5, **dadurch gekennzeichnet, dass** das feststehende Element (7) ein im Wesentlichen zylindrisches Element ist.

7. Sitz nach einem der vorhergehenden Ansprüche, **dadurch gekennzeichnet, dass** er Einrichtungen für ein automatisches In-Eingriff-Bringen (9a, 9b), und zwar insbesondere ein System aus einer elastischen Rückstelleinrichtung (9a) und/oder ein magnetisches System (9b), des Blockierelementes (6) in zumindest der ersten Blockierstruktur (5) des drehbaren Elementes (4) aufweist, und zwar wenn im Verlauf der Drehung des drehbaren Elementes (4) um die Drehachse (X) das Blockierelement (6) sich gegenüberliegend der ersten Blockierstruktur (5) befindet.

8. Sitz nach einem der vorhergehenden Ansprüche, **dadurch gekennzeichnet, dass** das Blockierelement (6) eine im Wesentlichen kreisbogenförmige Gestalt aufweist, und zwar bei Betrachtung im Querschnitt entlang einer zur Drehachse (X) senkrechten Ebene.

9. Sitz nach einem der vorhergehenden Ansprüche, **dadurch gekennzeichnet, dass** das Blockierelement (6) drehbar um eine Rotationsachse (6B) angebracht ist, die bezüglich derjenigen des Blockierelementes (6) und der Drehachse (X) des drehbaren Elementes (4) versetzt angeordnet ist, um dessen Eingreifen in die erste Blockierstruktur (5) zu ermöglichen.

10. Sitz nach einem der vorhergehenden Ansprüche, **dadurch gekennzeichnet, dass** die Drehachse (X) des drehbaren Elementes (4) eine Drehachse mit gesteuertem Drehmoment ist, wobei diese insbesondere eine Torsionsfeder (15) aufweist.

11. Sitz nach einem der vorhergehenden Ansprüche, **dadurch gekennzeichnet, dass** das Blockierelement (6) ein Element aufweist, das eine Einkerbung (6A) bildet, die sich gegenüberliegend dem drehbaren Element (4) positioniert befindet, wenn sich das klappbare Element in der Position einer Drehblockierung befindet, wobei das drehbare Element (4) das die Einkerbung (6A) bildende Element durchdringt.

12. Fahrzeug, aufweisend einen Sitz (3) nach einem der vorhergehenden Ansprüche.

## Claims

1. Vehicle seat (3) for a passenger comprising :
- a seat back (10) with a front face (10a) towards the passenger and a back face (10b) opposite the front face (10a), and
- a folding element (2), particularly a tray, towards the back face (10b) of the seat back (10), installed free to pivot relative to the seat back (10) about a rotation axis (X), so that the folding element (2) can be put into at least two predetermined angular positions, including a raised position in which the folding element (2) is not used,
- a device (1) for locking the folding element (2) in position, **characterised in that** this device (1) comprises:
- a fixed element (7), fixed to said vehicle seat back (10),
- a rotating element (4), fixed to said folding element (2), installed free to rotate relative to said fixed element (7) about the rotation axis (X) and being at least partially inserted in the fixed element (7), said rotating element (4) comprising at least a first locking structure (5),
- a locking element (6), installed on said fixed element (7) and that can be moved between a locking position in which it locks said rotating element (4) in rotation from said fixed element (7) by at least partial engagement of said locking element (6) in said at least one first locking structure (5) of said rotating element (4), and a release position in which it allows free rotation of said rotating element (4) from said fixed element (7) by release of said locking element (6) in said at least one first locking structure (5) of said rotating element (4).

2. Seat according to claim 1, **characterised in that** the first locking structure (5) of the rotating element (4) is a first opening (5) and/or a locking latch (5).

3. Seat according to claim 1 or 2, **characterised in that** the rotating element (4) is an approximately cylindrical element comprising at least a first locking structure (5) on its lateral surface.

4. Seat according to any one of the previous claims, **characterised in that** the fixed element (7) comprises at least a second locking structure (8), particularly a second opening (8), through which the locking element (6) can engage.

5. Seat according to claim 4, **characterised in that** the first locking structure (5) and the second locking structure (8) are capable of facing each other to enable the locking element (6) to engage through first (5) and second (8) locking structures.

6. Seat according to claim 4 or 5, **characterised in that** the fixed element (7) is an approximately cylindrical element.

7. Seat according to any one of the previous claims, **characterised in that** the device (1) comprises auto-engagement means (9a, 9b), particularly an elastic return device system (9a) and/or a magnetised system (9b), causing the locking element (6) to engage into the at least the first locking structure (5) of the rotating element (4), when the locking element (6) is facing the first locking structure (5) during rotation of the rotating element (4) about the rotation axis (X).

8. Seat according to any one of the previous claims, **characterised in that** the locking element (6) is shaped in the form of an arc of a circle, when observed in section in a plane perpendicular to the rotation axis (X).

9. Seat according to any one of the previous claims, **characterised in that** the locking element (6) is installed free to rotate about a rotation axis (6B) offset from the rotation axis of the locking element (6) and from the rotation axis (X) of the rotating element (4) so that the locking element (6) can be engaged in the first locking structure (5).

10. Seat according to any one of the previous claims, **characterised in that** the rotation axis (X) of the rotating element (4) is a controlled torque rotation axis, particularly including a torsion spring (15).

11. Seat according to any one of the previous claims, **characterised in that** the locking element (6) comprises an element forming a notch (6A) facing the rotating element (4), when the folding element is in a position in which rotation is locked, the rotating element (4) penetrating into the element forming the notch (6A).

12. Vehicle comprising a seat (3) according to any one of the previous claims.
